(19) Europäisches Patentamt
European Patent Office
Office européen des brevets

(11) Publication number: **0 231 953 A2**

# (12) EUROPEAN PATENT APPLICATION

(21) Application number: 87101669.7

(22) Date of filing: 06.02.87

(51) Int. Cl.4: C08L 79/08 , C08L 63/00 , C08K 5/00 , G02F 1/13

(30) Priority: 07.02.86 JP 23932/86
18.02.86 JP 31837/86

(43) Date of publication of application:
12.08.87 Bulletin 87/33

(84) Designated Contracting States:
DE FR GB NL

(71) Applicant: Kabushiki Kaisha Toshiba
72, Horikawa-cho Saiwai-ku
Kawasaki-shi Kanagawa-ken 210(JP)

(72) Inventor: Sunohara, Kazuyuki
4-1-17-501 Takinogawa
Kita-ku Tokyo(JP)
Inventor: Takatoh, Kohki
A-323, Toshibakikuna-ryo 217
Oomamedo-cho
Kouhoku-ku Yokohama-shi
Kanagawa-ken(JP)
Inventor: Sakamoto, Masanori
100 Honmokuoosato-cho Naka-ku
Yokohama-shi Kanagawa-ken(JP)
Inventor: Oba, Masayuki
5-7-26, Shoudo Totsuka-ku
Yokohama-shi Kanagawa-ken(JP)
Inventor: Kaneko, Nagao
1566-6, Izumi-cho Izumi-ku
Yokohama-shi Kanagawa-ken(JP)
Inventor: Ibaraki, Nobuki
2-21-1-124, Koma Ooisomachi
Naka-gun Kanagawa-ken(JP)
Inventor: Ide, Kyozoh
7258-8 Tsujidou
Fujisawa-shi Kanagawa-ken(JP)

(74) Representative: Hansen, Bernd, Dr.rer.nat. et al
Hoffmann, Eitle & Partner Patentanwälte
Arabellastrasse 4
D-8000 München 81(DE)

EP 0 231 953 A2

## (54) Light-absorbing resins for display device, display devices using the resin and method of manufacturing the same.

(57) For the display apparatus that uses an electro-optic modulating material such as liquid crystal, use is made of a thin film transistor which possesses a good response, as the driving element. In this transistor, there is provided a light-absorbing resin layer that is formed by a polyimide and a light absorber to prevent malfunctions due to light. A method of manufacturing the display apparatus is disclosed.

# LIGHT-ABSORBING RESINS FOR DISPLAY DEVICE, DISPLAY DEVICES USING THE RESIN AND METHOD OF MANUFACTURING THE SAME

## BACKGROUND OF THE INVENTION

The present invention relates to light-absorbing resins, and display devices which use the resins and method of manufacturing the same, and more particularly, to an improvement in the light-covering structure of display devices and the polyamic acid composites that are used for that purpose.

Active matrix liquid crystal display devices which use a thinfilm transistor (abbreviated as TFT hereinafter) made of such materials as polysilicon, amorphous silicon, and tellurium have been disclosed in the past, for instance, in Japanese Patent Disclosure No. 56-25714, Japanese Patent Disclosure No. 56-25777, and so on, and they are well known. However, in the display devices of this kind, there are cases in which the transistor characteristics of the TFT is damaged markedly by the irradiation of light, depending upon the magnitude of the photoconductivity of the semiconductor materials used. As a result, the normal operation as a display device is obstructed. Incidence of light is done ordinarily either from the front side or from the rear side of TFT which is formed on a transparent substrate, depending upon the assembly method of the display device. For instance, when the electrode structure of TFT is of reversed staggered type, for covering the incident light from the TFT side, there is known a method in which a vapor deposited film of metal such as chrome or aluminum is formed by patterning on TFT via an insulating film. On the other hand, for light which is incident from the rear side of TFT, arrival of light is checked by the formation of the gate electrode for the semiconductor driving circuit with a metal such as chrome or aluminum. Light shielding method which shields light incident from the TFT side before it reaches the semiconductor portion by the use of an evaporated metallic film requires the formation of a metallic thin film by vapor deposition method followed by a patterning process which forms the film in a predetermined shape by photoetching method. In addition, it becomes indispensable to electrically insulate the evaporated metallic film from TFT and also the evaporated metallic film from the liquid crystal layer. It is also necessary to form between these layers insulating films with predetermined shape by patterning method, so that it requires a long manufacturing process which leads to an increase in the cost of the products. Moreover, when a transparent polymer such as polyimide is used for the insulating film, light incident from the TFT side infiltrates from the side surfaces of the insulating films to reach the semiconductor portion so that it is not possible to check the incident light completely, obstructing the improvement of the performance of the display device. Furthermore, for the insulating film for this purpose, polyimide is being used from the viewpoint not only of its electrical insulation but also of its excellent heat resistivity. In general, a polyimide film is formed by spreading polyamic acid which is its precursor, and transforming polyamic acid to polyimide by heat treatment. However, the adhesivity of a polyimide film to the solid state elements is not sufficiently high. For this reason, an improvement in adhesivity with the substrate is achieved by the addition of a silane coupling agent such as aminosilane, epoxysilane, and vinylsilane, and a titanate coupling agent to polyamic acid which is the precursor of the polyimide film. However, these coupling agents are expensive so that it is a factor of high cost for the case of using a polyimide film as the insulating film.

As a work aimed at resolving these problems, one may mention the invention which is disclosed in Japanese Patent No. 60-17422. According to the invention, a resin film is spread over a substrate which has a semiconductor driving circuit and dot electrodes which become the display unit, and a light-absorbing resin film is formed by dyeing a portion of the resin layer with a dyestuff. Incident light on the semiconductor portion of the semiconductor driving circuit is designed to be absorbed by the dyed layer. Although the invention disclosed in Japanese Patent No. 60-17422 can cover light which is incident from the rear side of TFT by the gate electrode, light incident from the TFT side cannot be shielded sufficiently well by a resin layer with light-absorbing portion. This is due to the following reasons. Namely, first, a part of the incident light passes through because of the low dyeing concentration of the dyestuff. Second, the light-absorbing portion is formed by dyeing a portion of the resin by masking, so that it is difficult to obstruct the penetration of light through transparent portion by diffraction. Further, the method has drawbacks such as the use of a highly toxic water-insoluble agent such as ammonium bichromate because of the water soluble nature of the resin used, and unsatisfactory heat resistivity of the resin used such as polyvinyl alcohol. Accordingly, it is not possible to prevent damages by light to transistor characteristics.

## SUMMARY OF THE INVENTION

An object of the present invention is to provide a display device which can give exact display with satisfactory response, without having abnormal operation that may be caused by light.

Another object of the present invention is to provide a method of manufacturing a display device which can give exact display with satisfactory response.

Still another object of the present invention is to provide improved light-absorbing resins for display devices.

## BRIEF DESCRIPTION OF THE DRAWING

Fig. I is a sectional view of a display device of the present invention.

Fig. 2 and Fig. 3 are diagrams for illustrating the spectroscopic transmission characteristics of a light-shielding polyimide composite obtained by giving a heat treatment to a light-shielding polyamic acid composite, produced by the present invention.

Fig. 4 is a diagram for illustrating the light-absorption characteristics of a black polyimide film, and Fig. 5 is a diagram for showing the characteristics of TFT obtained by the present invention.

## DESCRIPTION OF THE PREFERRED EMBODIMENT

Referring to Fig. I, there is shown an embodiment of the present invention. In the figure, sandwiched by two glass substrates A and B there is provided an electro-optic modulating substance I. Typical as the electro-optic modulating substance I is a dielectric liquid crystal with optical anisotropy, and its optical properties are changed by the voltage which is applied between transparent electrodes 4 and II. More specifically, light coming from the top of the figure is incident upon the electro-optic modulating substance I after its plane of oscillation is matched by a polarizing plate 2. In the electro-optic modulating substance I, the plane of polarization of the light is varied depending upon the state of the electro-optic modulating substance I. In this case, a polarizing plate which cuts ultraviolet and infrared rays is convenient in the sense of protection of the naked eyes. In what follows, description will be given in connection with an example in which the plane of oscillation is rotated by 90°. It will be assumed, for example, that the plane of polarization of the upper polarizing plate 2 is perpendicular to the plane of the paper, and that for the lower polarizing plate 2 is set to be parallel to the plane of the paper. A voltage is applied selectively to the electrodes 4 that are provided for each picture element. With this arrangement, only light that passes through the electro-optic modulating substance I which is placed above the picture element to which is applied a voltage, can pass through the lower polarizing plate 2 by the rotation of the phase. Consequently, if a driving element with satisfactory response is provided for the electrode that corresponds to each picture element, then it becomes possible to carry out image display by controlling the applied voltage. In so doing, with the provision of a color filter I0, it becomes possible to have a color display. Here, in order to arrange the molecular axes of the electro-optic modulating substance I in an appropriate direction, there are provided a pair of polyimide orientation films 9 that are given rubbing treatment in the mutually orthogonal directions.

A thin film transistor is formed directly on the substrate A, and as the material for the semiconductor, use is made of amorphous silicon which is formed, for example, by the decomposition of a silane, based on economic considerations and the ease in the fabrication. While amorphous silicon is cheap but allows a relatively simple manufacture, when it is used for an optical element such as in this case, it displays a drawback in that its conductivity becomes large under the irradiation of light. For this reason, a TFT was provided which consists of a source electrode 7a, amorphous silicon 6, and drain electrode 7b via a gate insulating film 5, after formation of a gate electrode 3 made of tantalum-molybdenum. Then, a light-absorbing resin layer 8 according to the present invention was formed toward the direction of incidence of light. The tantalum-molybdenum electrode can shield light sufficiently well so that it is possible to prevent the entrance of light into the interior penetrating from down below. In particular, this will be more effective in the case of display elements in which the light incidence side and the display side are made to be one and the same plane.

The light-absorbing resin layer 8 of the present invention includes at least one kind of resin and a light-absorbing agent.

As the light-absorbing agent, one may mention a black dyestuff, black pigment, infrared ray absorber, ultraviolet ray absorber, and so on which may be used individually or as a combination of two or more kinds.

As the black dyestuff to be used for the liquid crystal display device of the present invention, anything can be used as long as it can absorb light in the wavelength range of 400 to 700 nm. As concrete examples, one may mention commercial names Aminyl Black F-8BL, Sumilight Black G conc, Direct Deep Black XA, Sumifix Black B, Aminyl Black F-GL, Sumikaron Black S-BF, Spirit Black No. 920, Japanol Fast Black D conc, and Oil Black No. I made by Sumitomo Chemical Co., Ltd., commercial names PR-3F365, PR-8T364 and PR-8T-363 made by Sumika Color Co., Ltd., commercial names Mitsui PS Black B, Mitsui PS Black BG, Mitsui Black EX-58, and Mitsui Black EX-I74 made by Mitsui Toatsu Chemicals, Inc., commercial name Oleosol Fast Black BLN made by Taoka Chemical, Co., Ltd. and others. It should be mentioned that the present invention includes methods of combining two or more of the coloring materials such as red dye, blue dye, green dye, and yellow dye to obtain a blackened (optically black) substance that can be used for absorbing light.

The black pigment may be any thing as long as it can absorb light in the wavelength region from the 400 to 800 nm. As concrete examples one may mention commercial names such as Irgalite Black SN, Acetylene Black, Carbon Black, and Benzol Black made by Ciba-Geigy Ltd., commercial names such as Paliotol Black K0080 and L0080, Channel Black, Gas black, and Animal Black made by BASF Co., commercial names Helio Fast Black IR and IRK, Helio Fast Black TW, and Fast Black I00 made by Bayer AG Co., commercial names such as Tin Antimony Grey Cassiterite, Titanium Vanadium Antimony Grey Rutile, Cobalt Nickel Grey Periclase, and Manganese Ferrite Black Spinel made by Ferro Corp., and so forth. Further, in the case of pigments, use may also be made of a blackend pigment that can be obtained by blending two or more kinds of red pigment, blue pigment, green pigment, yellow pigment, and so on.

In the present invention, the amount of the black dyestuff and black pigment to be used is preferred to be I to 200 parts by weight for I00 parts by weight of resin, and the optimum range of parts by weight is 5 to I50. If the amount of black dyestuff used is less than I part by weight, the light absorption effect is insufficient, whereas if it exceeds 200 parts by weight, there sometimes occur difficulties in coating and pattern formation.

As the infrared ray absorber, there exist no particular restrictions as long as it absorbs light in the wavelength range of 700 to I500 nm. As concrete examples, there may be mentioned PA series with commercial names PA I00I, PA I005, and PA I006 made by Mitsui Toatsu Chemicals, Inc., HR series with commercial names HR I02 and HR I05-R made by Hodogaya Chemical Co., Ltd., and others. The amount of the infrared ray absorber is preferred to be 0.I to 50 parts by weight for I00 parts of resin, and the optimum range is 0.5 to 40 parts by weight. If the amount of the infrared ray absorber is less than 0.I part by weight, the light-shielding effect is insufficient, whereas if it exceeds 50 parts by weight, the coatability and the electrical properties tend to be unsatisfactory.

As the ultraviolet ray absorber there are no special limitations as long as it absorbs light in the wavelength range of 4 to 400 nm. As concrete examples, one may mention phenylsalicylate, p-tert-butylphenylsalycylate, 2,4-dihydroxybenzophenone, 2-hydroxy-4-methoxybenzophenone, 2-(2-hydroxy-5-methylphenyl) benzotriazole, 2-ethylhexyl-2-cyano-3,3′-diphenylacrylate, and others. The amount of the ultraviolet ray absorber in the present invention is preferred to be in the range of 0.I to 50 parts by weight, and optimally in the range of 0.5 to 40 parts by weight, for I00 parts by weight of resin. If the amount of the ultraviolet ray absorber used is less than 0.I part by weight, the light-shielding effect is insufficient, whereas if it exceeds 50 parts by weight, the coatability and the electrical properties tend to be unsatisfactory.

As the resin to be used for the light-absorbing resin layer of the present invention, there exist no special restrictions as long as it is a resin which is in general use.

As concrete examples, one may mention polyimide, polyamideimide, polyesterimide, polyamide, polyesteramide, polysulfone, polyethersulfone, polyaarylate, polyetherketone, polyacetal, polycarbonate, polybutyleneterephthalate, (denatured) polyphenylene oxide, polyphenylene sulfide, unsaturated polyester resin, bismaleimide resin (for instance, commercial names Kelimide, Imidalloy, and B-T resin), and others. These polymers may be used individually or as a mixed system of two or more kinds. Among these polymers, preferred are polyimide, polyamideimide, polyesterimide, polyamide, polyesteramide, and polyethersulfone. It should be noted that the molecular structure, repetitive structure unit, molecular weight, molecular weight distribution, and so on of the polymers are not under any limitations.

The electro-optic modulating substance to be used in the present invention can be anything and is not under any special restrictions. Thus, for example, one may mention biphenyl-type liquid crystal, Schiff-type liquid crystal, ester-type liquid crystal, cyclohexane-type liquid crystal, azoxy-type liquid crystal, and so forth which may be used individually or as a combination of two or more kinds. In particular, as concrete examples of liquid crystals to be used in the transmission-type TN mode, in which a semiconductor circuit, picture element electrodes, and others are formed in a united body on the substrate A, one may mention series with commercial names ZLI 1216, ZLI 1285, ZLI 1565, or ZLI 1694 made by Merck Co.

As a method of providing a light-absorbing resin layer on the semiconductor driving circuit of the substrate, a light absorber such as a black dye is dissolved together with a resin in an organic solvent, and the solution obtained is spread by bar spreading method, spinner spreading method, spray spreading method, immersion method, brush painting method, screen printing method, and other method. After drying, or with additional curing under predetermined curing conditions depending upon the kind of resin used, there is formed a light-absorbing resin layer that contains a light absorber. As an organic solvent for preparing a resin solution, one may mention 1,4-dioxane, N,N-dimethylformamide, N,N-dimethylacetamide, N-methyl-2-pyrrolidone, dimethylsulfoxide, caprolactam, sulfolane, N,N,N′,N′-tetramethyl urea, hexamethylphosphoramide, cellosolve, methylcellosolve, n-butylcellosolve, tetrahydrofuran, cyclohexanone, methylene dichloride, chloroform, methylcellosolve acetate, cellosolve acetate, n-butylcellosolve acetate, digrime, and so on. The concentration of the resin solution is in the range of 0.5 to 30% by weight, preferably 1 to 20% by weight. By a further addition of carbon powder, hyperfine particles of silicon dioxide, hyperfine particles of aluminum oxide, hyperfine particles of titanium oxide, and others, it is possible to enhance light-covering property of the film. Moreover, in order to improve the adhesivity of the light-absorbing resin layer, silane coupling agent such as aminosilane, epoxysilane, and a vinylsilane and titanate coupling agent, an epoxy resin, or the like may be added appropriately to the resin solution.

As an epoxy resin to be used for the present invention anything can be used without special limitations. As concrete examples, one may mention commercial names Epikote 834, Epikote 835, Epikote 1001, and Epikote 1004 made by Shell Chemical Co., Araldite GY 250, Araldite GY 252, Araldite GY 260, Araldite GY 280, Araldite 6071, Araldite 6084, Araldite 7071, Araldite 7072, and Araldite 7097 made by Ciba-Geigy, Ltd., Dow Epoxy Resin 337, Dow Epoxy Resin 661, Dow Epoxy Resin 664, and Dow Epoxy Resin 667 made by Dow Chemical International Co., and others.

The amount of the epoxy resin to be used in the present invention is in the range of 0.1 to 200 parts by weight for 100 parts by weight of resin, and preferably in the range of 10 to 100 parts by weight.

In the a light-absorbing resin composites as in the above, particularly important is the selection of resin. In this respect, the present invention can be considered a method which developed an especially excellent way of the selection. Namely, it is the choice of polyamic acid composite characterized by the inclusion of a polyamic acid and a light-absorbing agent.

What is meant by polyamic acid in the present invention is a polymer which consists of the following repetitive construction unit

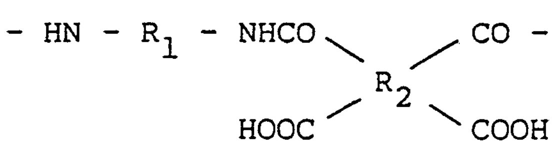

(in the formula, $R_1$ represents a divalent organic group and $R_2$ represents a quadrivalent organic group). Such a polymer can be manufactured normally by condensation-polymerization of a diamino compound and tetracarbonic acid dianhydride.

As concrete examples of diamino compound one may mention m-phenylenediamine, p-phenylenediamine, 2,4-tolylenediamine, 3,3′-diaminodiphenyl ether, 4,4′-diaminodiphenyl ether, 3,4′-diaminodiphenyl ether, 3,3′-diaminodiphenyl sulfone, 4,4′-diaminodiphenyl sulfone, 3,4′-diaminodiphenyl sulfone, 3,3′-diaminodiphenyl methane, 3,4′-diaminodiphenyl methane, 4,4′-diaminodiphenyl methane, 4,4′-diaminodiphenyl sulfide, 3,3′-diaminodiphenyl ketone, 3,4′-diaminodiphenyl ketone, 4,4′-diaminodiphenyl ketone, 2,2′-bis (p-aminophenyl) propane, 1,3-bis (m-aminophenoxy) benzene, 1,3-bis (p-aminophenoxy) benzene, 1,4-bis (p-aminophenoxy) benzene, 4-methyl-2,4-bis (p-aminophenyl)-1-pentene, 4-methyl-2,4-bis - (p-aminophenyl)-2-pentene, 1,4-bis α,α-dimethyl-p-aminobenzyl) benzene, imino-dip-phenylenediamine, 1,5-diaminonaphthalene, 2,6-diaminonaphthalene, 4-methyl-2,4-bis (p-aminophenyl) pentane, 5 (or 6)-amino-1-(p-aminophenyl), 1,3,3-trimethyl-indane, bis (p-aminophenyl) phosphine oxide, 4,4′-diaminoazobenzene, 4,4′-diaminodiphenyl urea, 4,4′-bis (p-aminophenoxy) biphenyl, 2,2-bis [p-(p′-aminophenoxy) phenyl] propane,

2,2-bis [p-(m-aminophenoxy) phenyl] propane, 4,4′-bis (p-aminophenoxy) benzophenone, 4,4′-bis (p-aminophenoxy) diphenylsulfone, 4,4′-bis [p-(α,α-dimethyl-p′-aminobenzyl) phenoxy] benzophenone, 4,4-bis [p-(ç,ç-dimethyl-p′-aminobenzyl) phenoxy] diphenylsulfone, bis (4-aminophenyl) dimethyl silane, bis (4-aminophenyl) tetramethyldisiloxane, bis (γ-aminopropyl) tetramethyldisiloxane, l,4-bis (γ-aminopropyldimethylsilyl) benzene, bis (4-aminobutyl) tetramethyldisiloxane, bis (γ-aminopropyl) tetraphenyldisiloxane, bis (p′-aminophenyl) tetramethyldisiloxane, and others. In addition, it may be a compound in which the hydrogen atoms in the aromatic core of these aromatic diamines is substituted by at least one kind of substitutional group selected from the group consisting of chlorine atom, fluorine atom, bromine atom, methyl radical, methoxy radical, cyano radical, phenyl radical, and others. Further, one may mention also dimethylenediamine, trimethylenediamine, tetramethylenediamine, hexamethylenediamine, heptamethylenediamine, octamethylenediamine, nonamethylenediamine, decamethylenediamine, l,2-bis (3′-aminopropoxy) ethane, $H_2N-(CH_2)_3-O-(CH_2)_2-O-(CH_2)_3-NH_2$, l,4-diaminocyclohexane, 4,4′-diaminodicyclohexylmethane, l,3-bisaminomethylcyclohexane, l,4-bisaminomethylcyclohexane, l,3-diaminocyclohexane, 4,4′-diaminodicyclohexylisopropane, l,4-xylylenediamine, 2,6-diaminopyridine, 2,4-diamino-s-triazine, and others.

In the present invention, one kind or two or more kinds selected from the above group are made use of.

As concrete examples of tetracarboxylic acid dianhydride, one may mention pyromellitic acid dianhydride,
3,3′,4,4′-benzophenonetetracarboxylic acid dianhydride,
2,3,3′,4′-benzophenonetetracarboxylic acid dianhydride,
3,3′,4,4′-biphenyltetracarboxylic acid dianhydride,
bis (3,4-dicarboxyphenyl) methane dianhydride,
2,2-bis (3′,4-dicarboxyphenyl) propane dianhydride,
bis (3,4-dicarboxyphenyl) ether dianhydride,
bis (3,4-dicarboxyphenyl) sulfone dianhydride,
bis (3,4-dicarboxyphenyl) dimethylsilane,
bis (3,4-dicarboxyphenyl) tetramethyldisiloxane dianhydride,
l,4,5,8-naphthalenetetracarboxylic acid dianhydride,
2,3,6,7-naphthalenetetracarboxylic acid dianhydride,
butanetetracarboxylic acid dianhydride and others. In addition, it may be a compound which is obtained by substituting the hydrogen atoms in these compounds by at least one kind selected from the group consisting of chlorine atom, fluorine atom, bromine atom, methyl radical, methoxy radical, cyano radical, phenyl radical, and others. In the present invention, use is made of one kind or two or more kinds selected from the group consisting of these compounds mentioned above.

Ordinarily, polyamic acid is manufactured under the presence of an organic solvent. As the organic solvent for this purpose one may mention N,N-dimethylformaldehyde,
N,N-dimethylacetamide, N-methyl-2-pyrrolidone,
dimethylsulfoxide, caprolactam, γ-butylolactone, sulfolane,
N,N,N′,N′-tetramethyl urea, and hexamethylphosphoramide.

The polyamic acid to be used in the present invention is synthesized by bringing a diamino compound and tetracarboxylic acid dianhydride into reaction at equal number of moles, or the former to be in excess or in short within 5 molar percentage with respect to the latter, under the presence of an organic solvent, in the range of temperature of 20 to 70°C and for the range of duration of l0 minutes to 20 hours. It may be used either in the solution state as obtained above or in the state that is obtained by separating polymer by pouring the polyamic acid solution obtained into a poor solvent such as water, acetone, and methylethylketone, and then washing and drying it. As to the molecular weight of the polyami acid, there are no special limitations, and it can be as large to allow the formation of a film that can maintain a sufficient physical strength when it is spread on the substrate.

Next, a light-absorbing resin layer is retained by patterning method in the light sensitive portion. Namely, a known photoresist is spread over the light-absorbing resin layer prepared by the above method on a substrate with a semiconductor driving circuit and picture element electrodes, and after drying, it is exposed to the irradiation of light, with a predetermined mask placed on it, to remove the unwanted portions using a developer. Then, the portions from which the photoresist is removed are etched, for instance, in the case of using polyimide as the polymer, with a polymer dissolving etchant consisting of a mixed solution of hydrazine and ethylenediamine, to remove the light-absorbing resin layer and to create an aperture for picture element electrode. It should be mentioned that the creation of an aperture for the picture element electrode may also be carried out by plasma etching method, ion beam etching method, and other

methods, in addition to the photoetching method. Finally, a desired light-absorbing resin layer that covers the photosensitive member of the semiconductor driving circuit is obtained, by removing the photoresist that remains on the top portion of the light-absorbing resin layer through development with a stripper.

EXAMPLE I

In a reaction flask of 500 ml capacity which is equipped with a stirring rod, thermometer, and dropping funnel, 13.087 g of pyromellitic acid dianhydride, 19.332 g of 3,3',4,4'-benzophenonetetracarboxylic acid dianhydride, and 130 g of N,N-dimethylacetamide were taken in, and after the mixture was stirred thoroughly it was cooled to 0°C. Next, while maintaining the suspension at 0°C, solution obtained by dissolving 12.012 g of 4,4'-diaminodiphenyl ether and 17.540 g of 1,4-bis (p-aminophenoxy) benzene in 170 g of N,N'-dimethylacetamide was dropped slowly from the dropping funnel. After completion of dropping, it was stirred for 3.5 hours at 0 to 10°C to obtain a polyamic acid solution. After the solution was spread uniformly over a glass substrate using a spinner which is operated at 2000 rpm, it was dried for 30 minutes at 130°C to remove the solvent. Then, the film was detached from the substrate and was given a heat treatment for 1 hour at 250°C to obtain a polyimide film of thickness 1.1 µm. The spectroscopic transmission of the polyimide obtained was as shown by the curve (a) in Fig. 2. At the same time, a black polyimide film with thickness 1.2 um was obtained in a similar manner by dissolving 4.7 g of black dyestuff Spirit Black No. 920 (commercial name of a product by Sumitomo Chemical Co.) in 100 g of the polyamic acid solution obtained above. The spectroscopic transmission of the black polyimide film was as shown by the curve (b) in Fig. 2.

EXAMPLE 2

Using 15.268 g of pyromellitic acid dianhydride, 9.667 g of 3,3',4,4'-benzophenonetetracarboxylic acid dianhydride, 18.422 g of 4,4'-bis (p-aminophenoxy) biphenyl, 20.525 g of 2,2-bis [p-(p'-aminophenoxy) phenyl] propane, and 362 g of N,N-dimethylacetamide, a solution of polyamic acid was obtained in a manner analogous to EXAMPLE I. Next, similar to EXAMPLE I, a polyimide film of thickness 0.97 µm was obtained from the polyamic acid solution. Its spectroscopic transmission is shown in curve (a) of Fig. 3. On the other hand, a black polyimide film with thickness 1.1 µm was obtained from the solution obtained by dissolving 6.0 g of black dyestuff Mitsui PS Black B (commercial name of a product by Mitsui Toatsu Chemicals, Inc.) and 1.3 g of an infrared ray absorber PA 1006 (commercial name of a product by Mitsui Toatsu Chemicals, Inc.) in 100 g of the polyamic acid solution obtained in the above. The spectroscopic transmission of the black polyimide film is as shown by curve (b) of Fig. 3.

In addition, the black polyamic acid solution was spread over a glass substrate that has a switching element (thin film transistor) array in a manner similar to EXAMPLE I. After drying and a heat treatment (to transform into imide) followed by the well-known pattern formation method which uses a photoresist, the switching element portion alone was covered with the black polyimide. Using the substrate thus obtained, a liquid crystal display device was constructed and the driving characteristics of the switching element was examined. It was found that under the irradiation of white light of 10,000 lux, for a gate voltage of below 0 V there was seen a slight increase in the current, but it will cause no problem in the practical application.

EXAMPLE 3

(I) Preparation of a Black Polymer and its Performances

In a reaction flask (of inner volume 500 ml) equipped with a stirring rod, thermometer, and dropping funnel, there were thrown in 13.086 g of pyromellitic acid dianhydride, 19.340 g of 3,3',4,4'-benzophenonetetracarboxylic acid dianhydride, and 150 g of N,N-dimethylacetamide, which was stirred thoroughly and cooled to 0°C. While maintaining the suspension at 0°C, solution obtained by dissolving 17.538 g of 1,4-bis (4-aminophenoxy) benzene in 130 g of N,N-dimethylacetamide was dropped slowly using the dropping funnel. After completion of drop, the mixture was stirred for 4 hours at 0 to 10°C to obtain a polyamic acid solution. To 66 g of polyamic acid solution thus obtained, solution obtained by dissolving 4.2 g of a black dyestuff Spirit Black No. 920 (commercial name made by Sumitomo Chemical Co., Ltd.), 1.0 g of an infrared ray absorber PA 1006 (commercial name made by Mitsui Toatsu Chemicals, Inc.), and 8.0 g of epoxy resin Epikote 1001 (commercial name, made by Shell Chemical Co.) in 35 g of N,N-dimethylacetamide was added and mixed thoroughly to obtain a solution of a black polyamic acid. The solution was spread uniformly over a quartz glass wafer using a spinner of 2000 rpm. Then, the whole thing was dried and cured for 20 minutes at l00°C, for 20 minutes at l50°C, and for l hour at 250°C to obtain a black polyimide film with thickness l.8 µm. The result of measurement of its light absorption property was satisfactory as shown in curve (a) of Fig. 4.

The black polyamic acid solution obtained above was spread uniformly with a spinner of 2000 rpm over a glass substrate which has a gate electrode, insulating film, amorphous silicon, source electrode, drain electrode, picture element electrode, and others formed according to the usual method. Then, by drying and curing the whole thing for 30 minutes at l00°C and for l hour at l50°C, there was formed a black polyimide film which is a light absorbing resin layer of film thickness 2.0 µm. After that, a negative type photoresist OMR-85 (commercial name, made by TOKYO OHKA KOGYO Co., Ltd.) was spread over the light-absorbing resin layer using a spinner, and was pre-heated for l0 minutes at 80°C. Then, resist film of the portions, other than those of the amorphous silicon formed in dot-like shape, source electrode, and drain electrode, was removed by the usual photoetching method. Next, an aperture for a picture element electrode portion was created by etching the light-absorbing resin layer with hydrazine-ethylenediamine solution (ratio in weight of 5 : 5). After removing the photoresist used as the mask by Clean Strip - (commercial name, made by TOKYO OHKA KOGYO Co., Ltd.) washing by water of the surface, drying with nitrogen gas, and heating for l.5 hours at 200°C, complete curing of polyamic acid was carried out.

The result of examination of the TFT characteristics at this point produced transfer characteristics as shown in Fig. 5. Namely, in the cases of in-darkness and under irradiation with l0,000 lux white light, for a voltage $V_{DS}$ = l5 V between drain and source, there was recognized for the gate voltage $V_G \leqq 0_V$ a slight increase in the current due to photoconductivity of amorphous silicon. However, it has a level which does not at all affect its practical application. The TFT used here has a channel length of L = l0 µm and a channel width of W = 60.

Further, an orientation control film was provided on the surface of a substrate prepared as in the above manner, by coating HL ll00 (commercial name, made by Hitachi Chemical Co., Ltd.) using a spinner, and then there was given a flannel rubbing treatment in one direction. In addition, an orientation control film of HL ll00 was provided on an opposite electrode substrate that has predetermined electrodes and others on it, and a rubbing treatment was given in the direction which is orthogonal to the rubbing direction in the above. In this way, using a pair of electrode substrates and ZL ll565 (commercial name, made by Merck & Co.) as liquid crystal, a liquid crystal display apparatus was prepared according to the usual method. A continuous operation for 2,000 hours of the apparatus in accordance with a predetermined driving system under the lighting of fluorescent lamps of l0,000 lux, revealed an extremely satisfactory display condition, with no noticeable deterioration in the operation of amorphous silicon.

EXAMPLE 4

A black polyamic acid solution was obtained in a manner similar to EXAMPLE l, except for the use of 5.5 g of a black dyestuff Oil Black No. l (made by Sumitomo Chemical Co., Ltd.) in place of the black dyestuff Spirit Black No. 920 and nonuse of the infrared ray absorber PA l006. Then, a black polyimide film with thickness l.9 µm was formed on a quartz glass wafer in a manner similar to EXAMPLE l. The result of measurement of the light absorbing properties is shown in Fig. 2 (b).

EXAMPLE 5

To 66 g of 24% polyamic solution obtained in EXAMPLE l, a solution obtained by dissolving 4.2 g of a black dyestuff Spirit Black No. 920 (commercial name, made by Sumitomo Chemical Co., Ltd.), l.0 g of an infrared ray absorber PA l006 (commercial name made by Mitsui Toatsu Chemicals, Inc.), and 8.0 g of epoxy resin Epikote l00l (commercial name made by Shell Chemical Co.) in 35 g of N,N-dimethylacetamide, was added and thoroughly mixed to obtain a black polyamic acid solution.

According to the standard method, the black polyamic acid solution obtained was spread uniformly with a spinner at 2,000 rpm over a glass substrate on which are formed gate electrode, insulating film, amorphous silicon, source electrode, drain electrode, picture elements, and so on. Following that, a liquid crystal display apparatus was produced according to the same process as in EXAMPLE l. The display

apparatus obtained was operated continuously for 2,000 hours according to a predetermined method under fluorescent lamps of l0,000 lux. The display conditions obtained were very satisfactory with no visible degradation in the operation of the amorphous silicon.

EXAMPLE 6

A black polyamic acid solution was obtained in a manner similar to EXAMPLE I except that 5.5 g of black dyestuff Oil Black No. I (made by Sumitomo Chemical Co., Ltd.) in place of black dyestuff Spirit Black No. 920 and no use was made of infrared ray absorber PA l006. Next, a black polyimide film of thickness l.9 µm was formed on a quartz glass wafer using the above solution in a manner similar to EXAMPLE l. The result of measurement of the optical absorption characteristic was satisfactory analogous to EXAMPLE 2.

EXAMPLES 7 and 8

In EXAMPLES 5 and 6, 50 parts by weight of epoxy resin Epikote l00l was used for l00 parts by weight of polyamic acid. Samples (a) and (b) were prepared in which, except for use was not made of the epoxy resin, the composition ratio of all of the constituents were kept fixed. Coated films were formed on glass plates according to the method described in EXAMPLE I using the samples obtained in EXAMPLES 5 and 6 and samples (a) and (b).

The adhesive force of the coated films to the glass surface was evaluated by measuring the force which is required for toppling a cylindrical rod of length l5 cm and diameter l cm, as shown in Fig. 6, that is fixed perpendicularly to the coated films with epoxy resin adhesive agent (commercial name, Sony Bond SC 506), by applying a force to the rod at a point l0 cm from the glued surface. The results of the measurement are as shown in Table l.

| Sample | EXAMPLE 7 | EXAMPLE 8 | EXAM-PLE 5 | EXAM-PLE 6 |
|---|---|---|---|---|
| Adhesive Strength (gft) | 550 | 575 | 920 | 890 |

Clearly, the adhesive strength can be improved sharply by the addition of the epoxy resin.

EXAMPLE 9

(I) Preparation and Properties of Black Polymers

Into a reaction flask (inner volume of 500 ml) which is equipped with a stirring rod, a thermometer, and a dropping funnel, l3.086 g of pyromellitic acid dianhydride, l9.340 g of 3,3′,4,4′-benzophenonetetracarboxylic acid dianhydride, and l50 g of N,N-dimethylacetamide were thrown in, stirred thoroughly, and cooled down to 0°C. By keeping the suspension obtained at 0°C, a solution obtained by dissolving l7.538 g of l,4-bis (4-aminophenoxy) benzen in l30 g of N,N-dimethylacetanide is dropped slowly into the suspension by the use of the dropping funnel. After completion of dropping, the mixture was stirred for 4 hours at 0 to l0°C to obtain a polyamic acid solution.

In 70 g of the polyamic acid solution thus obtained, 5.0 g of a black pigment Irgalite Black SN - (commercial name made by Ciba-Geigy Ltd.) was dispersed uniformly, the mixture was diluted with 35 g of N,N-dimethylacetamide, to obtain a black polyamic acid solution. The solution was spread uniformly over a quartz glass wafer using a spinner at 2,000 rpm. Then, a black polyimide film of thickness 2.0 µm was

obtained by drying and curing the entirety of the wafer for 20 minutes at 100°C, for 20 minutes at 150°C, and 1 hour at 250°C. The result of measurement of optical absorption characteristic of the black polyimide thus obtained, was satisfactory one as shown in Fig. 7 (c).

(2) Manufacture and Properties of Elements

Liquid crystal display apparatus was manufactured in a manner similar to EXAMPLE 1. A continuous operation for 2,000 hours according to a predetermined driving method under fluorescent lamps of 10,000 lux, of the display apparatus manufactured showed a very satisfactory display condition, with no visible deterioration in the operation of the amorphous silicon. In addition, the display condition was satisfactory since the black pigment did not dissolve in the liquid crystal and no display abnormality was generated.

Moreover, an evaluation of the TFT characteristic in a manner similar to EXAMPLE 1 produced a result as shown in Fig. 8.

EXAMPLE 10

A black polyamic acid solution was obtained analogous to EXAMPLE 1 except for the use of black pigment Palitol Black K0080 (made by BASF Co.) in place of black pigment Irgalite Black SN (made by Ciba-Geigy Ltd.). Next, using the solution a black polyimide film of thickness 2.1 μm was formed on a quartz glass wafer in a manner analogous to that of EXAMPLE 1. The result of measurement of the optical absorption characteristic is as shown in Fig. 7d.

## Claims

1. A light-absorbing resin for display apparatus comprising a mixture of a polyamic acid and a light absorber.

2. The light-absorbing resin as claimed in claim 1, wherein the amount of a black dyestuff as the light absorber is 1 to 200 parts by weight for 100 parts by weight of the polyamic acid.

3. The light-absorbing resin as claimed in claim 1, wherein the amount of an infrared ray absorber as the light absorber is 0.1 to 50 parts by weight for 100 parts by weight of the polyamic acid.

4. The light-absorbing resin as claimed in claim 1, wherein the amount of the light absorber is 1 to 200 parts by weight of a black dyestuff and 0.1 to 50 parts by weight of an infrared ray absorber, for 100 parts by weight of the polyamic acid.

5. The light-absorbing resin as claimed in claim 1, wherein said polyamic acid is a polymer consisting of repetition of the following structural unit

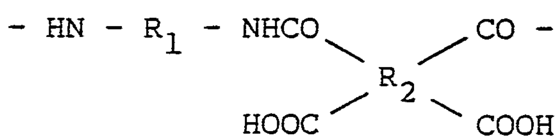

where $R_1$ is a divalent organic group and $R_2$ is a quadrivalent organic group.

6. The light-absorbing resin as claimed in claim 5, wherein said polymer is prepared by the condensation-polymerization of a diamino compound and a tetracarboxylic acid dianhydride.

7. The light-absorbing resin as claimed in claim 6, wherein the diamino compound is an aromatic diamine.

8. The light-absorbing resin as claimed in claim 6, wherein the diamino compound is a compound obtained by substitution of the hydrogen atoms in the aromatic core of the aromatic diamine by at least one kind of substitutional group selected from among the group consisting of chlorine atom, fluorine atom, bromine atom, methyl radical, methoxy radical, cyano radical, phenyl radical, and others.

9. The light-absorbing resin as claimed in claim 1, further comprising an epoxy resin.

10. The light-absorbing resin as claimed in claim 9, wherein the amount of the epoxy resin is 1 to 200 parts by weight for 100 parts by weight of the polyamic acid.

Il. The light-absorbing resin as claimed in claim I0, wherein the amount of the epoxy resin is I0 to I00 parts by weight for I00 parts by weight of the polyamic acid.

I2. The light-absorbing resin as claimed in claim I, wherein said light absorber is a black dyestuff.

I3. The light-absorbing resin as claimed in claim I, wherein said light absorber is an infrared ray absorber.

I4. The light-absorbing resin as claimed in claim I, wherein said light absorber is an ultraviolet ray absorber.

I5. The light-absorbing resin as claimed in claim I, wherein said light absorber is a blending of coloring dyestuffs.

I6. The light-absorbing resin as claimed in claim I2, wherein the amount of the black dyestuff is I to 200 parts by weight for I00 parts by weight of the light-absorbing resin layer.

I7. The light-absorbing resin as claimed in claim I6, wherein the amount of the black dyestuff is 5 to I50 parts by weight for I00 parts by weight of the light-absorbing resin layer.

I8. A display apparatus comprising:

a pair of substrates,

an electro-optic modulating substance layer sandwiched between said substrates,

electrodes provided on the substrates for applying an electric field to said electro-optic modulating substance layer,

a driving element for selectively applying a voltage to the electrodes, and

a light-absorbing resin layer that covers at least the photosensitive portion of said driving element, said light-absorbing resin layer including at least a light absorber and at least one kind selected from among the group consisting of polyimide, polyamideimide, polyesterimide, polyamide, polyesteramide, and polyether-sulfone.

I9. The display apparatus as claimed in claim I8, wherein said electrodes consist of a plurality of picture element electrodes provided on one of the substrates and the opposing electrodes that are provided on the other substrate.

20. The display apparatus as claimed in claim I8, wherein said electro-optic modulating substance layer consists of a liquid crystal that has an optical anisotropy.

2I. The display apparatus as claimed in claim I8, wherein said display apparatus is a liquid crystal television.

22. The driving element as claimed in claim I8, wherein said driving element is a thin film transistor.

23. A method of manufacturing the display apparatus as claimed in claim I8 comprising steps of:

forming light-absorbing resin layer on the pair of substrate, on which the driving elements are formed and

removing partially the light-absorbing resin layer retaining the photosensitive portion by the patterning method.

24. The method of manufacture as claimed in claim 23, wherein said step of forming the light-absorbing resin layer is carried out by the use of a solution obtained by dissolving a light-absorbing resin in an organic solvent.

25. The method of manufacture as claimed in claim 24, wherein the resin concentration of the solution is 0.5 to 30% by weight.

26. The method of manufacture as claimed in claim 24, wherein the resin concentration of the solution is I to 20% by weight.

27. The method of manufacture as claimed in claim 24, wherein said step of forming the light-absorbing resin layer is carried out by the bar coating method.

28. The method of manufacture as claimed in claim 24, wherein said step of forming the light-absorbing resin layer is carried out by the spinner coating method.

29. The method of manufacture as claimed in claim 24, wherein said step of forming the light-absorbing resin layer is carried out by the spray coating method.

30. The method of manufacture as claimed in claim 24, wherein said step of forming the light-absorbing resin layer is carried out by the immersion method.

3I. The method of manufacture as claimed in claim 24, wherein said step of forming the light-absorbing resin layer is carried out by the brush coating method.

32. The method of manufacture as claimed in claim 24, wherein said step of forming the light-absorbing resin layer is carried out by the screen printing method.

# FIG. 1

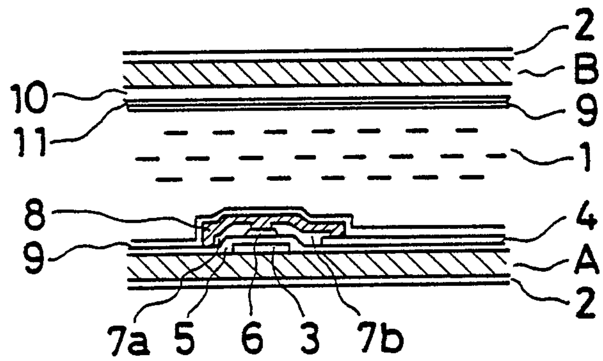
2
B
10
9
11
1
8
4
9
A
2
7a
5
6
3
7b

# FIG. 2

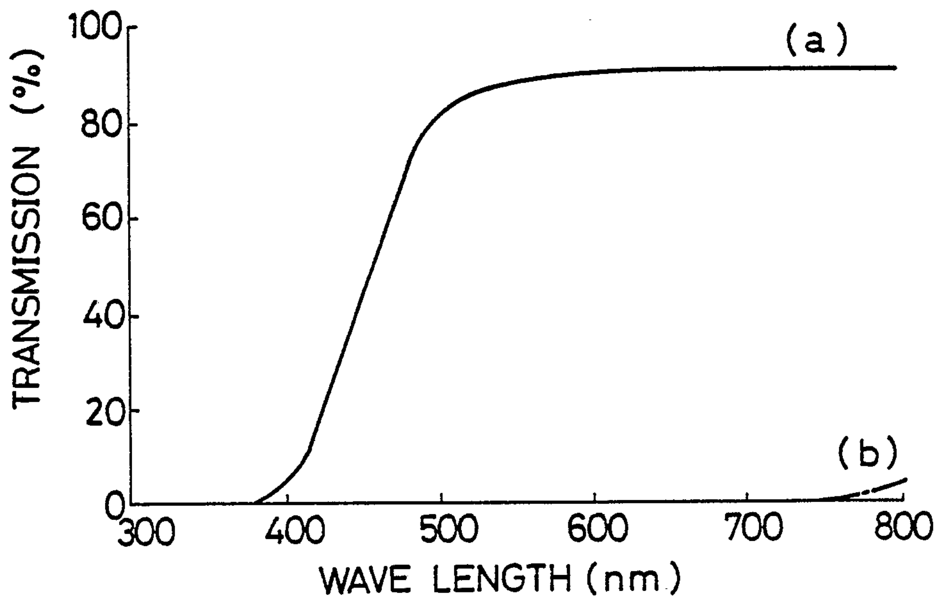
100
80
60
40
20
0
TRANSMISSION (%)
(a)
(b)
300
400
500
600
700
800
WAVE LENGTH (nm)

FIG.3

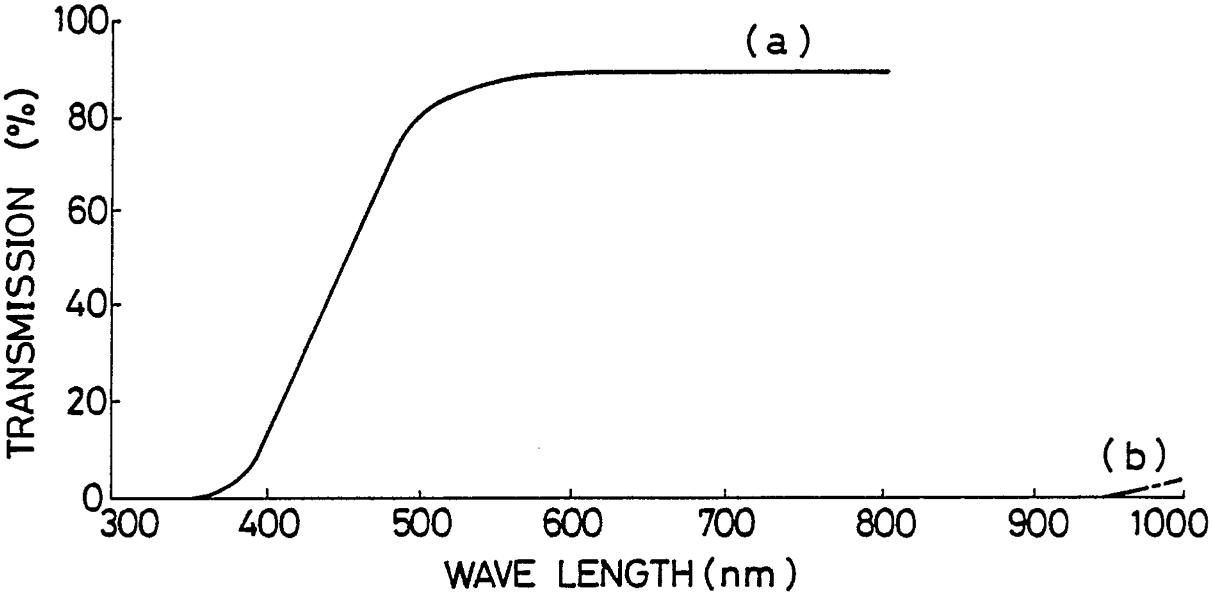

100
80
60
40
20
0
TRANSMISSION (%)
(a)
(b)
300
400
500
600
700
800
900
1000
WAVE LENGTH (nm)


FIG.4

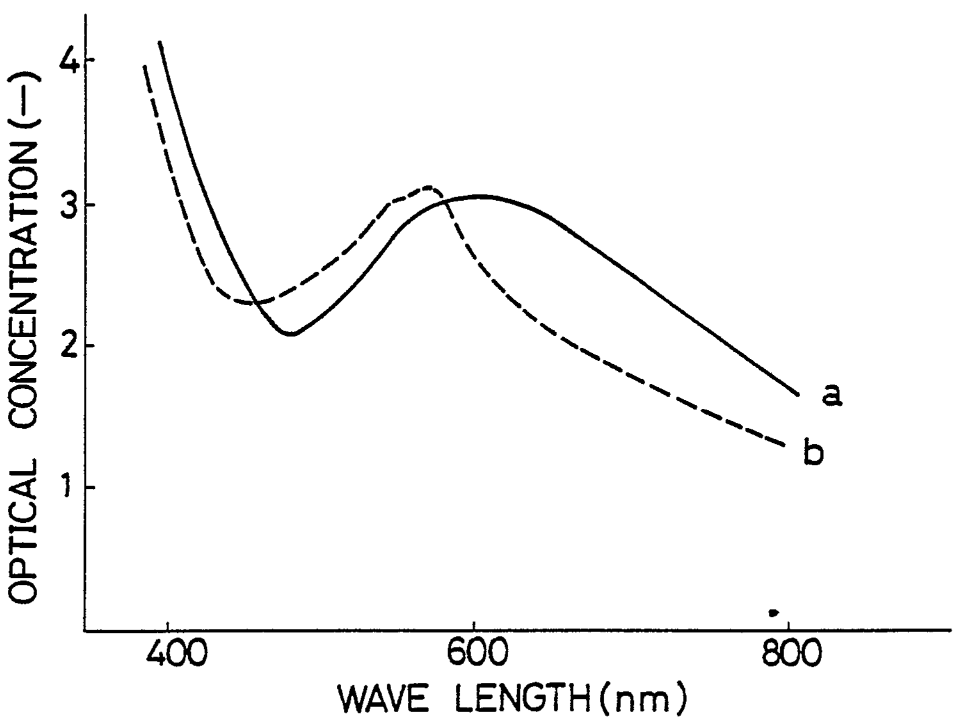

4
3
2
1
OPTICAL CONCENTRATION (—)
a
b
400
600
800
WAVE LENGTH (nm)

FIG. 5

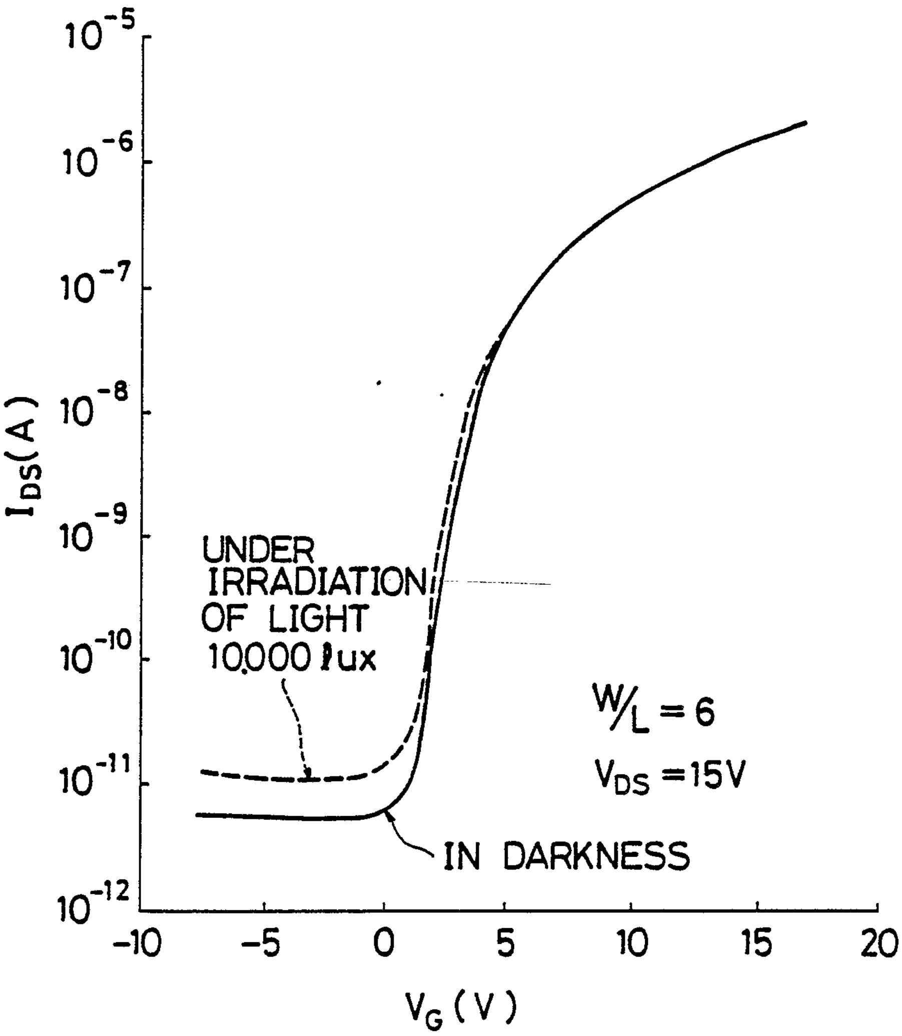

$10^{-5}$
$10^{-6}$
$10^{-7}$
$10^{-8}$
$10^{-9}$
$10^{-10}$
$10^{-11}$
$10^{-12}$
$I_{DS}(A)$
UNDER IRRADIATION OF LIGHT 10,000 lux
IN DARKNESS
W/L = 6
$V_{DS}$ = 15V
−10
−5
0
5
10
15
20
$V_G$ (V)

FIG. 6

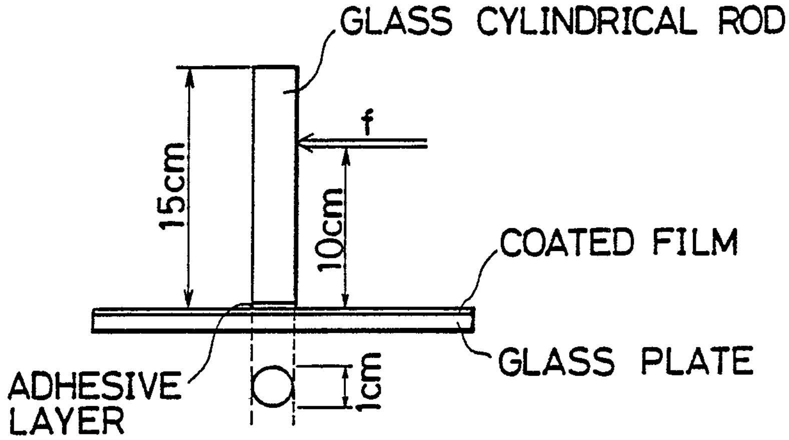
GLASS CYLINDRICAL ROD
f
15cm
10cm
COATED FILM
GLASS PLATE
ADHESIVE LAYER
1cm

FIG. 7

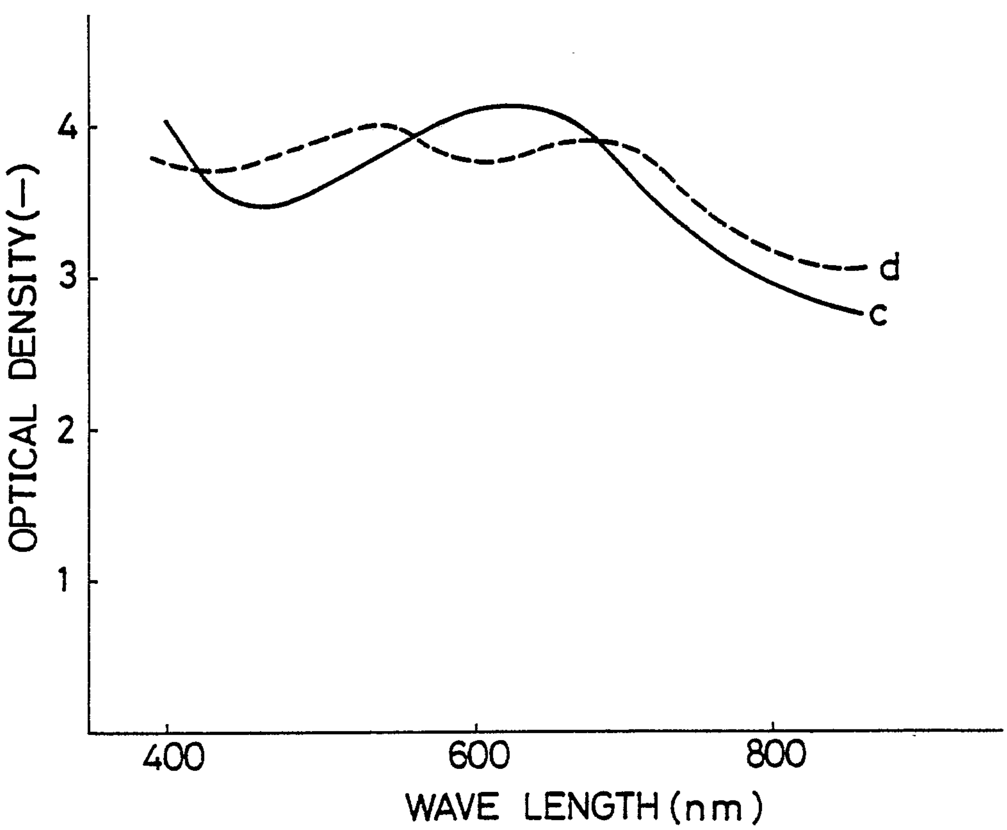
OPTICAL DENSITY(—)
4
3
2
1
d
c
400
600
800
WAVE LENGTH (nm)

FIG. 8

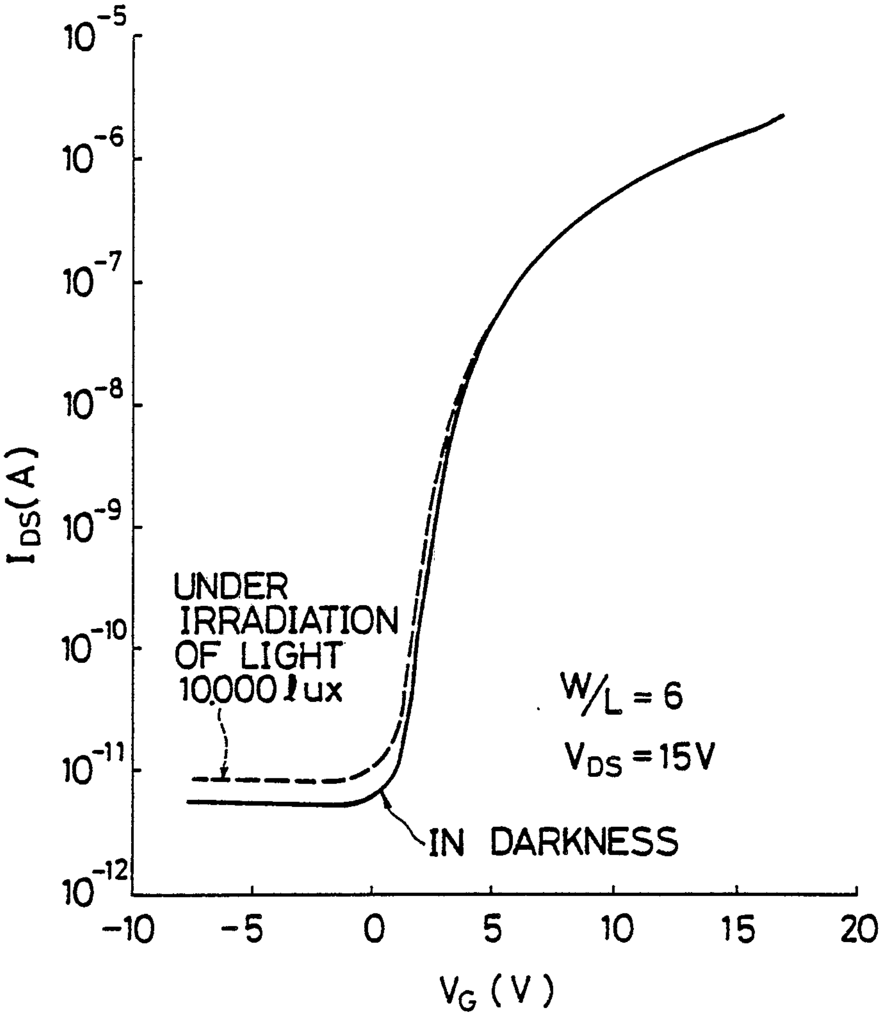

10^-5
10^-6
10^-7
10^-8
10^-9
10^-10
10^-11
10^-12
IDS(A)
UNDER IRRADIATION OF LIGHT 10,000 lux
IN DARKNESS
W/L = 6
VDS = 15V
-10
-5
0
5
10
15
20
VG (V)